# EUROPÄISCHE PATENTSCHRIFT

(11) **EP 1 479 284 B1**
(45) Veröffentlichungstag und Bekanntmachung des Hinweises auf die Patenterteilung: **04.10.2006**
(21) Anmeldenummer: 04011619.6
(22) Anmeldetag: 15.05.2004
(51) Int. Cl.: A01G 3/06

(54) **Elektromotorisch betriebene Grasschere**
Electric motor driven lawn shears
Cisaille à gazon à moteur électrique

(30) Priorität: 21.05.2003 DE 10324286
(43) Veröffentlichungstag der Anmeldung: 24.11.2004
(73) Patentinhaber: GARDENA Manufacturing GmbH, 89079 Ulm (DE)
(72) Erfinder: Kohl, Peter, 89257 Illertissen (DE); Agostini, Johannes, 89257 Illertissen (DE)
(74) Vertreter: Patentanwälte Ruff, Wilhelm, Beier, Dauster & Partner

(56) Entgegenhaltungen:
- DE-A- 2 839 780
- US-A- 3 851 388
- US-A- 3 959 878

## Beschreibung

Die Erfindung betrifft eine elektromotorisch betriebene Grasschere, mit einer aus einem Ober- und einem Untermesser bestehenden Messeranordnung, die in einem Schneidkopf auswechselbar angeordnet und durch ein Arretierteil gehalten ist.

Eine Grasschere dieser Art ist bekannt. Sie weist unterhalb des Untermessers einen parallel zur Messerfläche vom Gehäuse abziehbaren Schieber auf, mit dem die Messeranordnung im Gehäuse gehalten ist. Wird dieser als Arretierteil dienende Schieber abgezogen, kann die Messeranordnung nach unten herausgenommen werden.

Aus der US-A-38 51 388 ist außerdem eine elektrisch betriebene Grasschere bekannt, bei der die beiden Messer Teile eines in das Antriebsgehäuse einsetzbaren Moduls sind, der rastend auf einer Grundplatte des Gehäuses gehalten wird und sich parallel zu dieser Grundplatte auch abziehen lässt. Diese Anordnung ist relativ aufwendig.

Der vorliegenden Erfindung liegt die Aufgabe zugrunde, eine elektromotorisch betriebene Grasschere so auszubilden, dass der Auswechselvorgang der Messeranordnung, die durch Verschleiß nach gewisser Zeit unbrauchbar wird, möglichst einfach und ohne Zuhilfenahme von Werkzeugen vorgenommen werden kann.

Zur Lösung dieser Aufgabe wird bei einer elektromotorisch betriebenen Grasschere der eingangs genannten Art vorgesehen, dass das Arretierteil als eine um ein Scharnier schwenkbare Klappe ausgebildet ist.

Diese Ausgestaltung ermöglicht nach dem Abklappen des Arretierteils einen ungehinderten Zugang zu der Messeranordnung. Die Ausgestaltung sichert aber gleichzeitig zu, dass das Arretierteil, anders als bei bekannten Bauarten, beim Vorgang des Messeraustausches nicht verloren gehen kann, weil es über sein Scharnier fest mit dem Gehäuse der Grasschere verbunden bleibt.

In Weiterbildung der Erfindung kann die Klappe mit Verriegelungsmitteln versehen sein, die ein Öffnen oder Schließen in einfacher Weise erlauben. In Ausgestaltung der Erfindung können diese Verriegelungsmittel als Raststrukturen ausgebildet sein, die mit Gegenstrukturen am Gehäuse zusammen wirken.

Dabei ist es besonders zweckmäßig, wenn der Bolzen des Scharnieres in einem Langloch geführt ist, das in Richtung der Verriegelungs- und Entriegelungsbewegung der Klappe verläuft. Diese Ausgestaltung nämlich ermöglicht es in einfacher Weise, die Klappe zu ver- oder zu entriegeln. Im geöffneten Zustand bleibt sie dennoch einstückig mit dem Gehäuse verbunden.

Die neue Ausgestaltung eröffnet auch die Möglichkeit, beispielsweise eine Strauchscherenmesseranordnung anstelle der Grasscherenmesseranordnung einzusetzen, wenn die Abmessungen der letzteren entsprechend ausgebildet sind.

Die Erfindung ist anhand von Ausführungsbeispielen in den Zeichnungen dargestellt, die im folgenden erläutert werden. Es zeigen:
- Fig. 1: einen schematischen Längsschnitt durch die Mittelebene einer erfindungsgemäßen Grasschere mit einer geöffneten Arretierklappe,
- Fig. 2: eine vergrößerte Darstellung des Querschnitts durch eine Grasschere nach Fig. 1 und Fig. 4 längs der Linie II-II im verriegelten Zustand der Arretierklappe,
- Fig. 3: eine Darstellung ähnlich Fig. 2 jedoch in entriegelten Zustand der Arretierklappe, und
- Fig. 4: eine Grasschere nach Fig. 1, jedoch mit geschlossener Arretierklappe und mit einer eingesetzten Strauchscherenmesseranordnung.

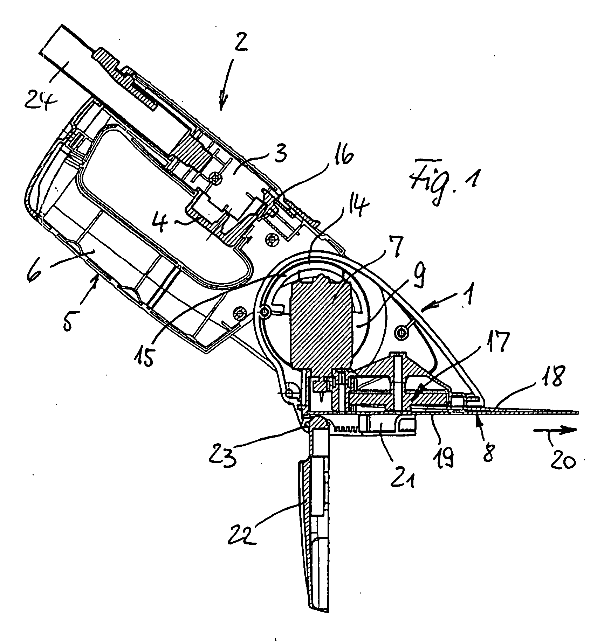

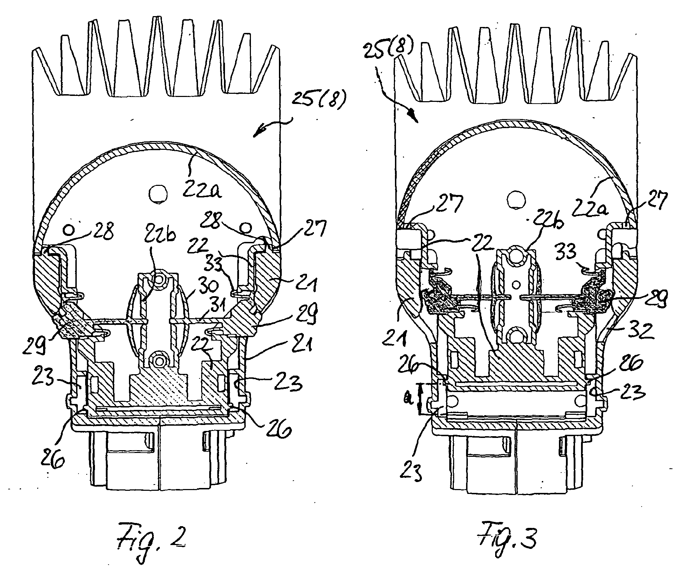

Aus Fig. 1 geht hervor, dass die neue Grasschere aus einem Schneidkopf 1 und einem schwenkbar daran angesetzten Gehäuseteil 2 besteht, das einen Handgriff mit einem oberen Bügelteil 3 und mit einer Betätigungstaste 4 sowie mit einem unteren Bügelteil 5 bildet. Im unteren Bügelteil sind Aufnahmekammern 6 für nicht gezeigte Akkumulatoren vorgesehen, die einen Elektromotor 7 mit Strom versorgen, der wiederum zum Antrieb einer Messeranordnung 8 dient, die am Schneidkopf angebracht ist. Der elektrische Antriebsmotor 7 ist dabei in einer zylindrischen Hohlkammer 9 angeordnet, die im Schneidkopf 1 gebildet ist. Die Achse der Hohlkammer 9 bildet eine Schwenkachse zwischen dem Gehäuseteil 2 und dem Schneidkopf 1, wobei die Anordnung so getroffen ist - wie aus Fig. 2 zu entnehmen ist - dass der Gehäuseteil 2 beidseitig von der Hohlkammer 9 abragende Zapfen 10 mit Lagerarmen 11 umfasst. Zylindrische Führungsflächen 12 dieser Lagerarme 11 und zylindrische Führungsflächen 13 der Achsstummel 10 wirken einschließlich der zylindrisch aneinander grenzenden Außenflächen 14 der Hohlkammer 9 bzw. des halbzylindrischen Gegenstückes des Gehäuses 2 zusammen, um die Schwenkbewegung zu erreichen. Die Stromzufuhr von den Akkumulatoren 6 über den von der Taste 4 betätigbaren Schalter 16 zum Motor 7 kann über Verbindungskabel erfolgen, die durch Schlitze in den Stirnseiten der Hohlkammer 9 durchgeführt wird.

Der Antriebsmotor 7 wirkt in an sich bekannter Weise auf einen Exzenterantrieb 17, der wiederum ein bewegliches Obermesser 18 der Messeranordnung 8 in Bewegung setzt, wobei der Messeranordnung 8 noch ein feststehendes Untermesser 19 zugeordnet ist.

Die Messeranordnung 8 lässt sich aus der in Fig. 1 dargestellten Lage im Sinne des Pfeiles 20 abziehen und durch eine neue Messeranordnung ersetzen, wenn Verschleiß aufgetreten ist. Die Messeranordnung 8 wird dabei in einem Führungsschlitz zwischen dem Exzenterantrieb 17 und einem Schneidkopfunterteil 21 geführt und durch eine Arretierklappe 22 gesichert, die in Fig. 1 in der geöffneten Stellung gezeigt ist.

Die Arretierklappe 22 ist über einen aus den Fig. 2 und 3 ersichtlichen Scharnierbolzen 26 im linken Bereich des Gehäuseteils 21 angelenkt, wobei der Scharnierbolzen mit seinen Zapfen beidseitig in je ein Langloch 23 eingreift, das auf beiden Seiten des Schneidkopfunterteils 21 in Richtung des Pfeiles 20 verläuft. Die Arretierklappe 22 wird so in der dargestellten Stellung sicher und unverlierbar am Schneidkopf 1 und damit an der Grasschere gehalten. Sie lässt sich im Gegenuhrzeigersinn hochklappen und kann dann - wegen der Führung des Scharnierbolzens im Langloch 23 - entgegensetzt zur Richtung des Pfeiles 20 und parallel zur Messeranordnung 8 verschoben werden. Sie rastet dann in korrespondierende Strukturen am Unterteil 21 des Schneidkopfes 1 ein. Die Messeranordnung 8 ist dann fixiert. Zum Auswechseln der Messeranordnung erfolgt zunächst eine Abziehbewegung der Klappe 22 in Richtung des Pfeiles 20, bis die Raststrukturen außer Eingriff sind. Die Arretierklappe 22 kann dann im Uhrzeigersinn in die in Fig. 1 gezeigte Lösestellung abgeklappt werden. Sie bleibt dabei am Schneidkopf 1 angelenkt.

Die Fig. 2 lässt erkennen, dass die Arretierklappe 22 auf ihrer dem Schneidkopfunterteil 21 zugewandten Seite angrenzend an einen kreisbogenförmigen Rand 22a einen von diesem Rand abknickenden Bereich mit jeweils einer Öffnung 27 aufweist, die in der arretierten Stellung über einen Vorsprung 28 des Schneidkopfunterteiles 21 greift. Wie außerdem zu erkennen ist, greift der Scharnierbolzen 26 bzw. seine nach beiden Seiten der Arretierklappe 22 abstehenden Achsstummel jeweils in das Langloch 23 ein und sind in diesem verriegelten Zustand in der Nähe des hinteren Endes dieses Langloches 23 gelegen. Diese arretierte Stellung innerhalb des Langloches 23 wird durch Druckknöpfe 29 gesichert, die von blattfederartig ausgebildeten Teilen 30 über Verbindungsstege 31 nach außen in entsprechende Öffnungen 32 des Schneidkopfunterteiles 21 hereingedrückt und in dieser Lage wiederum durch hakenförmige Anschläge 33 gesichert sind. Die Blattfedern 30 stützen sich dabei an einem Mittelteil 22b der Arretierklappe ab. Ihre Stege 31 sind in entsprechenden Öffnungen dieses Mittelteiles 22b geführt.

Soll die Arretierklappe 22 daher aus der arretierten Stellung gelöst werden, dann müssen diese beiden Druckknöpfe 29 seitlich gegen die Wirkung ihrer Blattfedern hereingedrückt werden, wonach dann die gesamte Arretierklappe 22 um den Weg a in Richtung zu den Schneidzacken der Messeranordnung 25 bzw. 8 verschoben wird, bis sie die Lage nach Fig. 3 erreicht. In dieser Lage rasten die Druckknöpfe 23 jeweils seitlich am Schneidkopfunterteil 21 ein und die abstehenden Zapfen des Scharnierbolzens 26 haben die Lage nach Fig. 3 erreicht, in der sie an entsprechenden Anschlagstegen des Schneidkopfunterteiles 21 anliegen. Die Arretierklappe 22 kann aus dieser Lage in die Lage nach Fig. 1 abgeklappt werden. Nach Auswechseln der Messeranordnung erfolgt das Rückklappen und dann das Zurückschieben der Arretierklappe 22 in die Lage nach Fig. 2. Als Rastmittel dienen hierbei die Druckknöpfe 29 mit ihrer Blattfederanordnung und die formschlüssig ineinandergreifenden Zapfen 28, die in die Öffnungen 27 der Arretierklappe eingreifen.

Selbstverständlich ist es auch möglich, andere Arten der Arretierung und Entriegelung über Einrastmittel vorzusehen. Das gezeigte Ausführungsbeispiel der Fig. 2 und 3 ist aber besonders einfach aufgebaut und leicht zu bedienen. Es sichert gleichzeitig ohne die Gefahr eines unbeabsichtigten Lösens jeweils die Endlagen der in Eingriff bzw. außer Eingriff kommenden Rastmittel.

Wie die Fig. 1 noch zeigt, ist an dem Handgriffteil 3 des Gehäuses 2 eine Einsteckhülse 24 angebracht, die dazu dienen kann, einen Führungsstiel für die Grasschere aufzunehmen, so dass von einer Bedienungsperson in aufrechter Halterung gearbeitet werden kann.

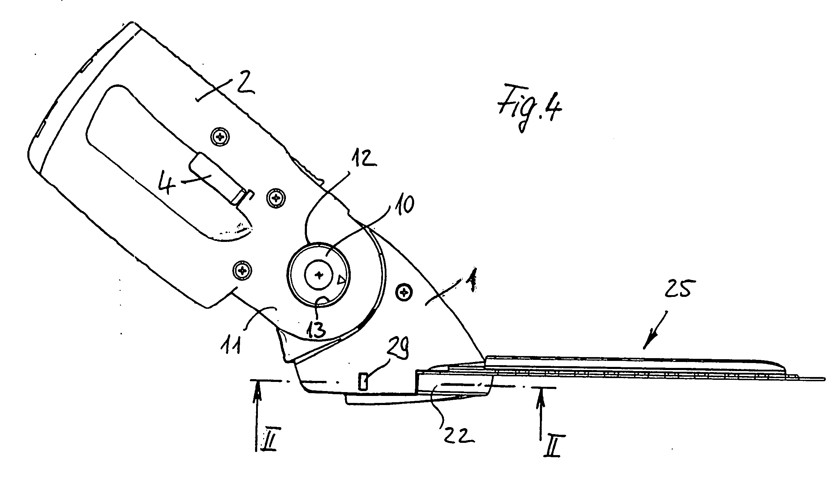

Die Fig. 4 zeigt im übrigen die Möglichkeit, ein Strauchscherenmesser 25 am Schneidkopf 1 der Grasschere anzubringen, welches ebenso wie die Messeranordnung 8 durch die Arretierklappe 22 am Schneidkopf 1 gesichert ist.

## Patentansprüche

1. Elektromotorisch betriebene Grasschere mit einer aus einem Ober- und einem Untermesser bestehenden Messeranordnung (8), die in einem Schneidkopf (1) auswechselbar angeordnet und durch ein Arretierteil gehalten ist, **dadurch gekennzeichnet, dass** der Arretierteil als eine um ein Scharnier (23) schwenkbare Klappe (22) ausgebildet ist.

2. Grasschere nach Anspruch 1, **dadurch gekennzeichnet, dass** die Klappe (22) mit Verriegelungsmitteln (29, 28) ausgestattet ist.

3. Grasschere nach Anspruch 2, **dadurch gekennzeichnet, dass** die Verriegelungsmittel als Raststrukturen (29, 28) ausgebildet sind, die mit Gegenstrukturen (32, 27) an einem Gehäuseteil (21) des Schneidkopfes zusammenwirken.

4. Grasschere nach Anspruch 1, **dadurch gekennzeichnet, dass** Zapfen (26) eines Scharnierbolzens in einem Langloch (23) geführt sind, das in Richtung einer Verriegelungs- und Entriegelungsbewegung (20) verläuft.

5. Grasschere nach Anspruch 2, **dadurch gekennzeichnet, dass** als Verriegelungsmittel elastische Druckknöpfe (29) beidseitig vorgesehen sind, die in Öffnungen (32) eines Schneidkopfunterteiles (21) zur Verriegelung eingreifen.

6. Grasschere nach Anspruch 5, **dadurch gekennzeichnet, dass** zusätzlich zu den Druckknöpfen (29) Verriegelungsöffnungen (27) der Arretierklappe zugeordnet sind, die zur Verriegelung der Arretierklappe Zapfen (28) am Schneidkopfunterteil (21) übergreifen.

7. Grasschere nach Anspruch 5, **dadurch gekennzeichnet, dass** die Druckknöpfe (29) elastisch über Federmittel (30) an einem Mittelteil (22b) der Arretierklappe abgestützt sind.

## Claims

1. Electric motor operated grass shears with a blade arrangement (8) which consists of an upper and a lower blade, is disposed in a replaceable manner in a cutting head (1) and is held by a retaining part, **characterised in that** the retaining part is formed as a flap (22) which can be pivoted about a hinge (23).

2. Grass shears according to Claim 1, **characterised in that** the flap (22) is provided with locking means (29, 28).

3. Grass shears according to Claim 2, **characterised in that** the locking means are formed as detent structures (29, 28) which co-operate with mating structures (32, 27) at a housing part (21) of the cutting head.

4. Grass shears according to Claim 1, **characterised in that** lugs (26) of a hinge pin are guided in an elongated hole (23) which extends in the direction of a locking and unlocking movement (20).

5. Grass shears according to Claim 2, **characterised in that** resilient push-buttons (29) are provided as locking means on both sides, these push-buttons engaging in openings (32) of a cutting head lower part (21) for locking purposes.

6. Grass shears according to Claim 5, **characterised in that**, in addition to the push-buttons (29), locking openings (27) are associated with the retaining flap, these openings engaging over lugs (28) at the cutting head lower part (21) in order to lock the retaining flap.

7. Grass shears according to Claim 5, **characterised in that** the push-buttons (29) are resiliently supported via spring means (30) at a central part (22b) of the retaining flap.

## Revendications

1. Cisaille à gazon à moteur électrique comprenant un agencement de couteaux (8) comprenant un couteau supérieur et un couteau inférieur, qui est disposé de façon interchangeable dans une tête coupante (1) et est maintenu par une partie d'arrêt, **caractérisée en ce que** la partie d'arrêt .est conçue comme un clapet (22) pouvant basculer autour d'une charnière (23).

2. Cisaille à gazon selon la revendication 1, **caractérisée en ce que** le clapet (22) est équipé de moyens de verrouillage (29, 28).

3. Cisaille à gazon selon la revendication 2, **caractérisée en ce que** les moyens de verrouillage sont conçus comme des structures d'encliquetage (29, 28), qui coopèrent avec des contre-structures (32, 27) sur une partie de boîtier (21) de la tête coupante.

4. Cisaille à gazon selon la revendication 1, **caractérisée en ce que** des pivots (26) d'un boulon de charnière sont guidés dans un trou oblong (23) qui s'étend en direction d'un mouvement de verrouillage et de déverrouillage (20).

5. Cisaille à gazon selon la revendication 2, **caractérisée en ce qu'**il est prévu comme moyens de verrouillage des boutons-poussoirs (29) élastiques des deux côtés, qui s'engagent dans des ouvertures (32) d'une partie inférieure de tête coupante (21) pour le verrouillage.

6. Cisaille à gazon selon la revendication 5, **caractérisée en ce que**, en supplément des boutons-poussoirs (29), des ouvertures de verrouillage (27) sont attribuées au clapet d'arrêt, lesquelles recouvrent des pivots (28) sur la partie inférieure de tête coupante (21) pour le verrouillage du clapet d'arrêt.

7. Cisaille à gazon selon la revendication 5, **caractérisée en ce que** les boutons-poussoirs (29) sont soutenus de façon élastique par des moyens à ressort (30) sur une partie centrale (22b) du clapet d'arrêt.
